(19) Europäisches Patentamt
European Patent Office
Office européen des brevets

(11) Publication number: 0 135 941
B1

(12) **EUROPEAN PATENT SPECIFICATION**

(45) Date of publication of patent specification: **06.06.90**

(21) Application number: **84111653.6**

(22) Date of filing: **28.09.84**

(51) Int. Cl.[5]: **C 08 J 5/22,** C 08 J 3/11 // (C08J5/22, C08L81:06),(C08J3/11, C08L81:06)

# (54) Polyarylethersulfone polymer solution.

(30) Priority: **29.09.83 US 536843**

(43) Date of publication of application: **03.04.85 Bulletin 85/14**

(45) Publication of the grant of the patent: **06.06.90 Bulletin 90/23**

(84) Designated Contracting States: **AT BE CH DE FR GB IT LI LU NL SE**

(56) References cited:
EP-A-0 000 361
EP-A-0 030 326
EP-A-0 113 112
DE-A-2 052 225
GB-A-2 000 720
US-A-4 169 117

(73) Proprietor: **AMOCO CORPORATION**
**200 East Randolph Drive P.O. Box 5910-A**
**Chicago Illinois 60680 (US)**

(72) Inventor: **Robeson, Lloyd Mahlon**
**R.D. 1, Box 244**
**White House Station, N.J. 08889 (US)**
Inventor: **Maresca, Louis Michael**
**R.D. 1, Box 139A Riverview Terrace**
**Belle Mead, N.J. 08502 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is directed to a solution for coating comprising at least one select polyarylethersulfone dissolved in a solvent comprising methylene chloride or N,N-dimethylformamide.

Polyarylethersulfones containing the following repeat unit:

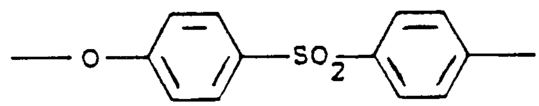

are commercially available polymers which have a wide variety of end-use applications including the ability to be cast into films. However, one of the disadvantages of the polyarylethersulfone, containing solely the above repeat unit, is the lack of low temperature boiling solvents from which cast films or adhesive solutions can be prepared. US—A—3,875,103 states that the above polyarylethersulfone has instability in solvents such as methylene chloride leading to short shelf-life (column 1, lines 11 to 23). The patent states that cyclic aliphatic ketones are good solvents for the polyarylethersulfone and the resulting solutions have good shelf-life. However, methylene chloride is an inexpensive, widely used low boiling solvent, and thus it would be advantageous if the polyarylethersulfone could be dissolved in it while the resulting solution retains its shelf-life.

Further, the polyarylethersulfone, containing solely the above repeat unit, does not exhibit stable solutions with N,N-dimethylformamide, a water soluble solvent, which is of interest if a solution of the polyarylethersulfone is to be coagulated in water. Specifically, anisotropic membrane production would be of interest utilizing solutions of the polyarylethersulfone. As polyarylethersulfones are commercially utilized as membranes for gas separation as well as reverse osmosis applications, the solutions in N,N-dimethylformamide would be useful for such applications.

It has been found that the selected polyarylethersulfones described herein exhibit solubility in N,N-dimethylformamide.

Another commercially available polyarylethersulfone contains the following repeat unit:

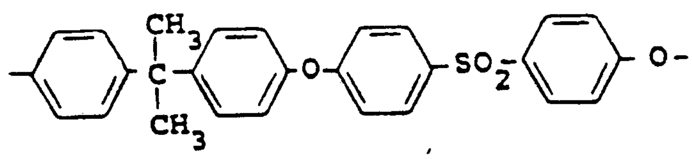

This polyarylethersulfone (see e.g. US—A—4 175 175) exhibits excellent solubility in a wide range of solvents including methylene chloride and N,N-dimethylformamide. However, a precipitate forms with methylene chloride (it takes several weeks) which must be filtered out if homogeneous films are to be prepared. The precipitate has been characterized as a cyclic dimer which crystallizes out of solution. The polyarylethersulfones described herein have not been observed to form a precipitate with methylene chloride.

A polyarylethersulfone containing repeat units of the following structure:

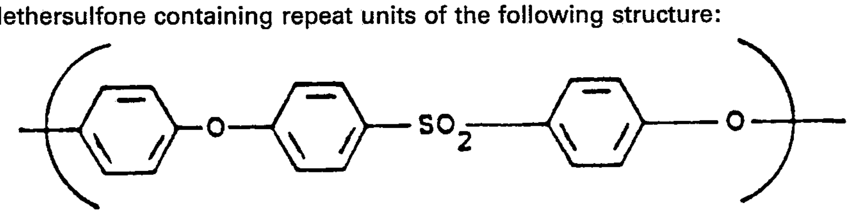

is not soluble in methylene chloride but swells and rapidly crystallizes when placed in contact with methylene chloride.

Thus, it can be seen that polymers made up of units of the following formula:

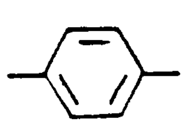 ; 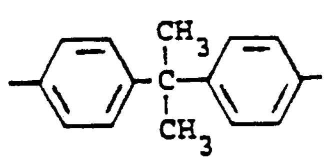 ; 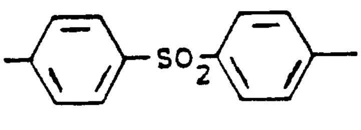

when independently combined with the following unit:

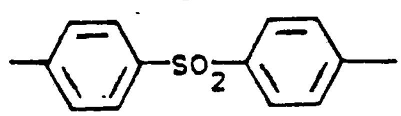

and connected through —O— units do not exhibit solution stability with methylene chloride but yield either a gelatinous material which is non-pourable or a precipitate which interferes with homogeneous film preparation.

It has now been found that the combination of two (or more) of the above units with the following unit:

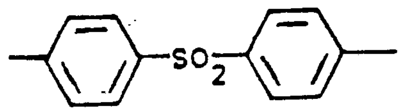

connected with —O— units yield polymers with significantly improved solution stability in methylene chloride and N,N-dimethylformamide. Also, the resultant polyarylethersulfones employed in this invention have excellent solution stability after extended storage time in both methylene chloride and N,N-dimethylformamide.

In EP—A—113 112, a document which is relevant under Article 54(3)EPC, there is described the preparation of polyarylethersulfones also employed in the present invention. From the examples of said document it can, however, be concluded that the liquid reaction mixtures obtained after the condensation of the corresponding starting materials contain considerable amounts of alkali metal salts, due to the initial presence of alkali metal (potassium) carbonate.

This invention is directed to the use of a solution for coating and to a solution for coating, said solution comprising at least one select polyarylethersulfone dissolved in a solvent comprising methylene chloride or N,N-dimethylformamide.

The polyarylethersulfones employed in this invention are amorphous thermoplastic polymers containing units of the formula:

(I) 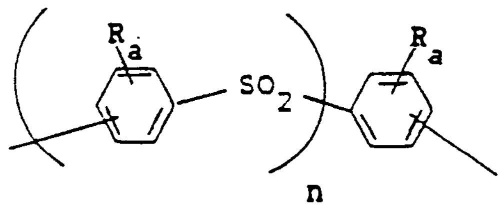 , and

(II) 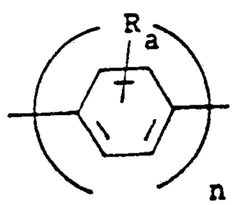

and/or

(III) 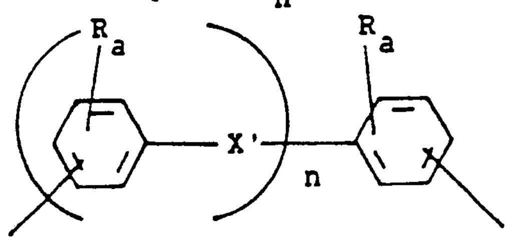

wherein R is independently hydrogen, $C_1$ to $C_6$ alkyl or $C_4$ to $C_8$ cycloalkyl, X' is independently

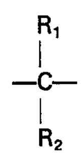

wherein $R_1$ and $R_2$ are independently hydrogen or $C_1$ to $C_9$ alkyl, or

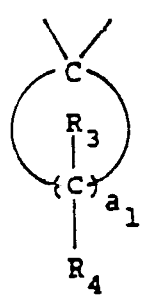

wherein $R_3$ and $R_4$ are independently hydrogen or $C_1$ to $C_8$ alkyl, and $a_1$ is an integer of 2, particularly 3, to 8; —S—, or —O—, a is an integer of 0 to 4 and n is independently an integer of 1 to 3 and wherein the ratio of unit (I) to the sum of units (II) and/or (III) is greater than 1. The units are attached to each other by an —O— bond. In case $R_1$, $R_2$, $R_3$ and/or $R_4$ are alkyl groups they can be methyl, ethyl, propyl, butyl, pentyl, hexyl, heptyl and octyl, the groups $R_1$ and $R_2$ can also additionally be nonyl. These groups can be present in the form of straight-chain or branched groups.

The solution for coating according to this invention is substantially free of alkali metal salts.

The present invention is also directed to a solid film prepared by using the solution defined above and to an anisotropic membrane or hollow fiber prepared by coagulation of the solution for coating of the present invention into an aqueous medium.

A preferred polymer employed in this invention contains units of the formula:

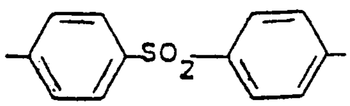 , and 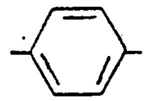 , or 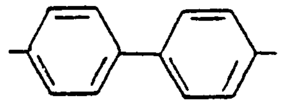

Another preferred polyarylethersulfone of this invention contains units of the formula:

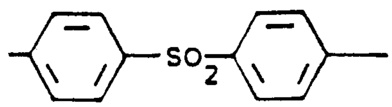 , and

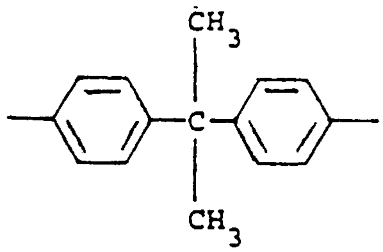

These units are attached to each other by an —O— bond. The polyarylethersulfone may be random or may have an ordered structure.

The polyarylethersulfones used in this invention have a reduced viscosity of from 0.4 to greater than 2.5, as measured in N-methylpyrrolidone, or other suitable solvent, at 25°C.

Said polyarylethersulfones are prepared by reacting the monomers represented by the following formulae:

(IV) 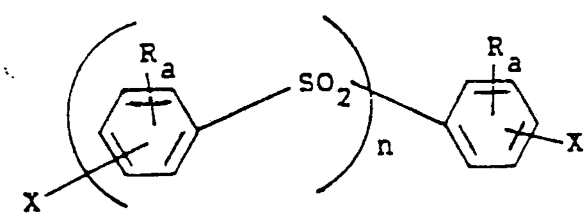

(V) 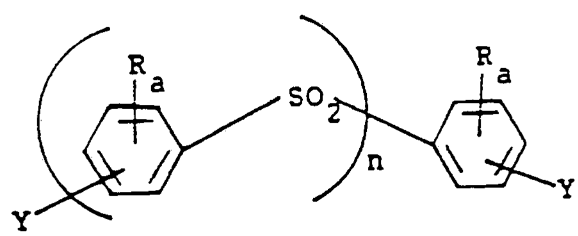

(VI) 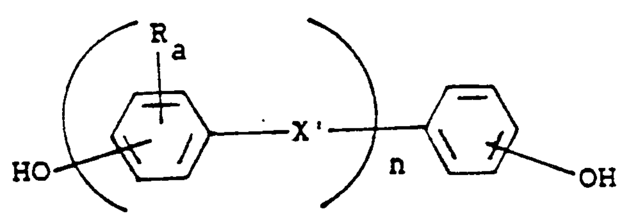

(VII) and/or 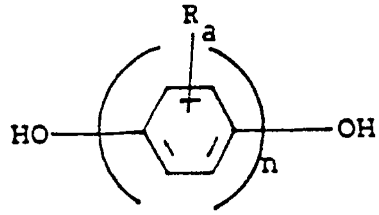

wherein R, a, X' and n are as previously defined, and X and Y are independently selected from Cl, Br, F, $NO_2$ or OH.

The ratio of the concentration of OH groups to Cl, Br, F and/or $NO_2$ groups used to form the polyarylethersulfone is from 0.90 to 1.10, preferably from 0.98 to 1.02.

The monomers, represented by formulas (IV), (V), (VI) and (VII), include the following:

2,2-bis(4-hydroxyphenyl)propane,
bis(4-hydroxyphenyl)methane,
4,4'-dihydroxydiphenyl sulfide,
4,4'-dihydroxydiphenyl ether,
4,4'-dihydroxydiphenyl sulfone,
2,4'-dihydroxydiphenyl sulfone,
4,4'-dichlorodiphenyl sulfone,
4,4'-dinitrodiphenyl sulfone,
4-chloro-4'-hydroxydiphenyl sulfone,
4,4'-biphenol, and
hydroquinone.

The preferred monomers include hydroquinone, 4,4-biphenol, 2,2-bis(4-hydroxyphenyl) propane, 4,4'-dichlorodiphenyl sulfone, and 4,4'-dihydroxydiphenyl sulfone or 4 chloro-4'-hydroxydiphenyl sulfone.

The polymers employed in this invention are prepared by contacting substantially equimolar amounts of the hydroxy containing compounds (depicted in formulas (IV) to (VII) *supra*) and halo and/or nitro containing compounds (depicted in formula (IV) and (V) supra) with from 0.5 to 1.0 mole of an alkali metal carbonate per mole of hydroxyl group in a solvent mixture comprising a solvent which forms an azeotrope with water in order to maintain the reaction medium at substantially anhydrous conditions during the polymerization and a polar aprotic solvent.

The temperature of the reaction mixture is kept at from 120 to 180°C, for 1 to 5 hours and then raised and kept at from 200 to 250°C, preferably from 210 to 230°C, for 1 to 10 hours.

The reaction is carried out in an inert atmosphere, e.g., nitrogen, at atmospheric pressure, although higher or lower pressures may also be used.

The polyarylethersulfone is then recovered by conventional techniques such as coagulation and/or solvent evaporation.

The solvent mixture comprises a solvent which forms an azeotrope with water and a polar aprotic solvent. The solvent which forms an azeotrope with water includes an aromatic hydrocarbon such as benzene, toluene, xylene, ethylbenzene and chlorobenzene.

The polar aprotic solvents employed in this invention are those generally known in the art for the manufacture of polyarylethersulfones and include sulfur containing solvents such as those of the formula:

$$R_5—S(O)_b—R_5$$

in which each $R_5$ represents a monovalent lower hydrocarbon group free of aliphatic unsaturation, which preferably contains less than 8 carbon atoms or when connected together represents a divalent alkylene group with b being 1 or 2. Thus, in all of these solvents all oxygens and two carbon atoms are bonded to the sulfur atom. Contemplated for use in this invention are such solvents as those having the formula:

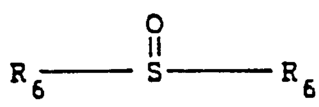 and 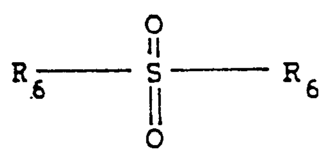

where the $R_6$ groups are independently lower alkyl, such as methyl, ethyl, propyl and butyl groups, and aryl groups such as phenyl and alkylphenyl groups such as the tolyl group, as well as those where the $R_6$ groups are interconnected as in a divalent alkylene bridge such as:

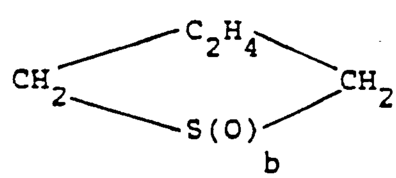

in tetrahydrothiophene oxides and dioxides. Specifically, these solvents include dimethylsulfoxide, dimethylsulfone, diphenylsulfone, diethylsulfoxide, diethylsulfone, diisopropylsulfone, tetrahydrothiophene 1,1-dioxide (commonly called tetramethylene sulfone or sulfolane) and tetrahydrothiophene-1 monoxide.

Additionally, nitrogen-containing solvents may be used. These include N,N-dimethylacetamide, N,N-dimethylformamide and N-methylpyrrolidone.

The azeotrope forming solvent and polar aprotic solvent are used in a weight ratio of from 1:10 to 1:1, preferably from 1:7 to 1:5.

In the reaction, the hydroxy-containing compound is slowly converted, *in situ*, to the alkali metal salt thereof by reacting with the alkali metal carbonate. The alkali metal carbonate is preferably potassium carbonate. Mixtures of carbonates such as potassium and sodium carbonate may also be used.

Water is continuously removed from the reaction mass as an azeotrope with the azeotrope forming solvent so that substantially anhydrous conditions are maintained during the polymerization.

It is essential that the reaction medium be maintained substantially anhydrous during the polycondensation. While amounts of water up to about one percent can be tolerated, and are somewhat beneficial when employed with fluorinated dihalobenzenoid compounds, amounts of water substantially greater than this are desirably avoided as the reaction of water with the halo and/or nitro compound leads to formation of phenolic species and only low molecular weight products are secured. Consequently, in order to secure the high molecular weight polymers, the system should be substantially anhydrous, and preferably contain less than 0.5 percent by weight water during the reaction.

Preferably, after the desired molecular weight has been attained, the polymer is treated with an activated aromatic halide or an aliphatic halide such as methyl chloride or benzyl chloride. Such treatment of the polymer converts the terminal hydroxyl groups into ether groups which stabilize the polymer. The polymer so treated has good melt and oxidative stability.

The polyarylethersulfone is dissolved in the methylene chloride or N,N-dimethylformamide in concentrations of from 1 to 50 g per 100 ml of the methylene chloride or N,N-dimethylformamide.

Additionally, up to about fifty percent of the methylene chloride can be replaced with a polar or aromatic solvent such as chlorobenzene. With the N,N-dimethylformamide solution additional water soluble solvents (e.g. N,N-dimethylacetamide) may be used.

## EXAMPLES

The following examples serve to give specific illustrations of the practice of this invention.

The following designations used in the Examples have the following meaning:

*Polyarylethersulfone I:* A polymer having the following repeated unit:

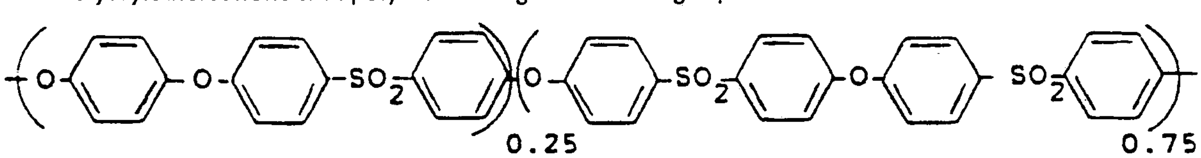

The polymer has a reduced viscosity of 0.49 dl/g as measured in chloroform (0.2 g/100 ml) at 25°C.

*Polyarylethersulfone II:* A polymer having the following repeat unit:

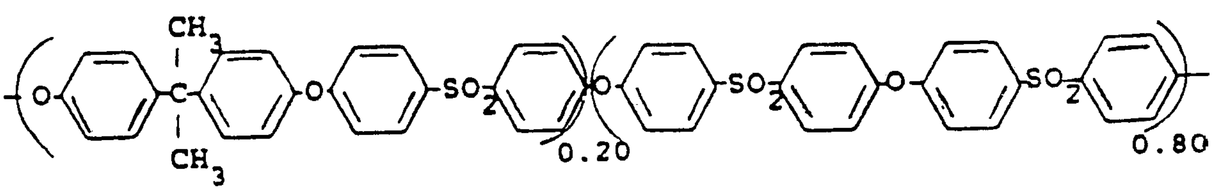

*Polyethersulfone:* A polymer having the following repeat unit:

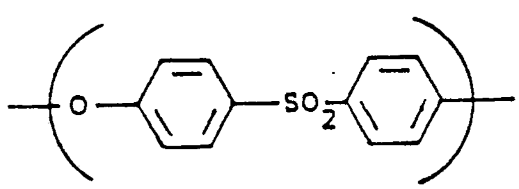

The polymer has a reduced viscosity of 0.48 dl/g as measured in N-methyl pyrrolidone (0.2 g/100 ml) at 25°C.

### Control A

Twenty grams of Polyethersulfone were placed in a container with 90 ml of methylene chloride. The Polyethersulfone only partially dissolved, and after 24 hours, the dissolved Polyethersulfone precipitated, leaving an opaque, gelatinous mass.

Example 1

Twenty grams of Polyarylethersulfone I were placed in a container with 90 ml of methylene chloride. The polyarylethersulfone totally dissolved, and after 2 months no precipitate was observed. Part of the solution was then poured onto a glass plate, and a film was cast which exhibited excellent transparency. After 3 months, a gelatinous material was observed which could not be poured.

Control B

Ten grams of Polyethersulfone were placed in a container with 90 ml of methylene chloride. The solution totally dissolved, but after 4 days the polymer came out of solution leaving a non-pourable gelatinous material.

Example 2

Ten grams of Polyarylethersulfone I were placed in a container with 90 ml of methylene chloride. The solution totally dissolved, and after 2 months no precipitation was observed. The solution was then poured onto a glass plate, and after solvent evaporation a transparent film was removed.

Control C

Five grams of Polyethersulfone were placed into a container with 90 ml of methylene chloride. The polymer totally dissolved; however, after 7 days it came out of solution and was a non-pourable, gelatinous material.

Example 3

Five grams of Polyarylethersulfone I were placed into a container with 90 ml of methylene chloride. The polymer totally dissolved, and after 2 months no precipitation was observed. The solution was then poured onto a glass plate, and after solvent evaporation a transparent film was removed.

Example 4

Twenty grams of a polyarylethersulfone II were placed into a container with 90 ml of methylene chloride. The polymer totally dissolved, and after 1 month no precipitation or gelation was observed. After two months, a gelatinous material resulted which could not be poured.

Control D

Twenty grams of a polysulfone of structure

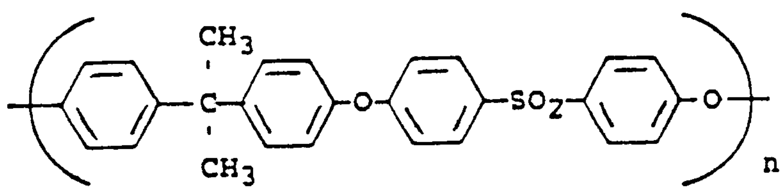

with a reduced viscosity of 0.48 dl/g as measured in chloroform (0.2 g/100 ml) at 25°C were placed into a container with 90 ml of methylene chloride. The polymer totally dissolved. After one month a fine precipitate was observed and continued to increase in size and concentration thereafter. This precipitation is believed due to the crystallization of a cyclic dimer of the above structure from solution.

Control E

Twenty grams of a polyarylethersulfone of the structure

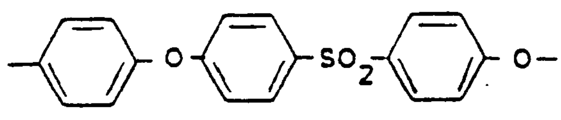

with a reduced viscosity of 0.42 dl/g as measured in N-methylpyrrolidone (0.2 g/100 ml) at 25°C were placed into a container with 90 ml of methylene chloride. The polymer never dissolved but swelled and crystallized.

These experiments note that the structures comprised of the following units

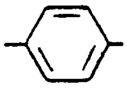
,
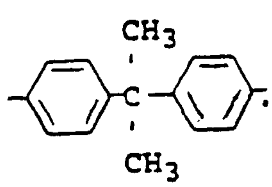
and
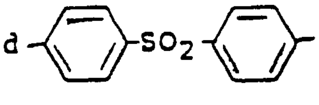

when individually combined with another unit of

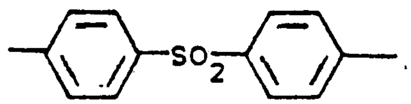

connected with —O— units, do not yield stable solutions as evidenced by either formation of a gelatinous mass or yielding a precipitate (e.g., cyclic dimer). However, when two of the three above noted units are combined with units of

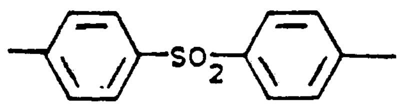

a stable solution results with much longer times required to yield gelatinous behavior and/or precipitate formation.

Control F

Twenty grams of Polyethersulfone were placed in a container with 90 ml of N,N-dimethylformamide. The polymer never completely dissolved, instead a gelatinous mass resulted which could not be poured.

Example 5

Twenty grams of a Polyarylethersulfone I were placed in a container with 90 ml of N,N-dimethylformamide. The polymer completely dissolved and remained a stable, pourable solution for over two months.

**Claims**

1. Use of a solution comprising at least one polyarylethersulfone containing units of the following formula:

(I) 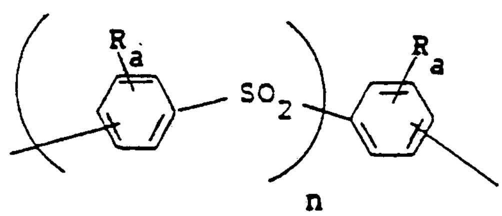 , and

(II) 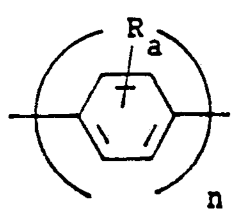

and/or

(III) 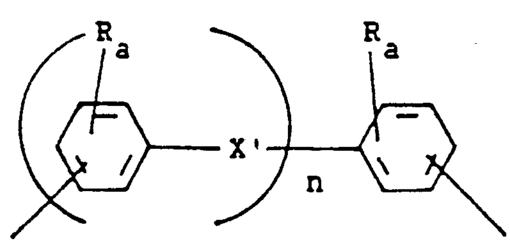

wherein R is independently hydrogen, $C_1$ to $C_6$ alkyl or $C_4$ to $C_8$ cycloalkyl, X' is independently

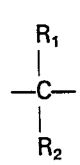

wherein $R_1$ and $R_2$ are independently hydrogen or $C_1$ to $C_9$ alkyl, or

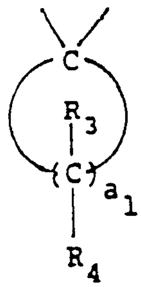

wherein $R_3$ and $R_4$ are independently hydrogen or $C_1$ to $C_8$ alkyl, and $a_1$ is an integer of 2 to 8; —S—, or —O—, a is an integer of 0 to 4 and n is independently an integer of 1 to 3 and wherein the ratio of unit (I) to the sum of units (II) and/or (III) is greater than 1, wherein the units are attached to each other by an —O— bond dissolved in a solvent comprising methylene chloride or N,N-dimethylformamide for coating.

2. Use as defined in claim 1 wherein in the polyarylethersulfone, unit (I) has the formula:

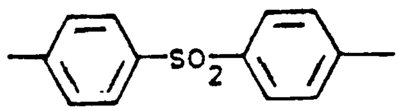

3. Use as defined in one or both of claims 1 to 2, wherein in the polyarylethersulfone, unit (II) has the formula:

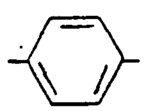 , or 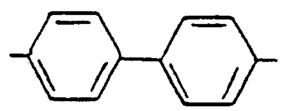

4. Use as defined in one or more of claims 1 to 3, wherein in the polyarylethersulfone, unit (III) has the formula:

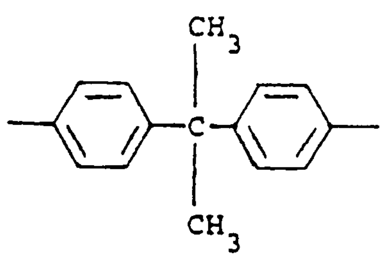

5. Use as defined in claim 1, wherein the polyarylethersulfone contains recurring units of the formula:

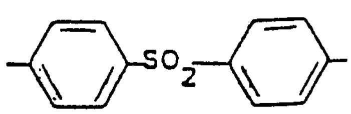 , and 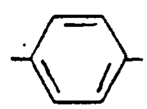 , or 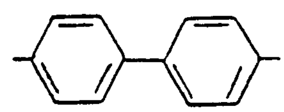

said units being attached to each other or by an —O— bond.

6. Use as defined in claim 1, wherein the polyarylethersulfone contains recurring units of the formula:

(I) 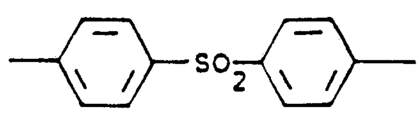 , and

(II) 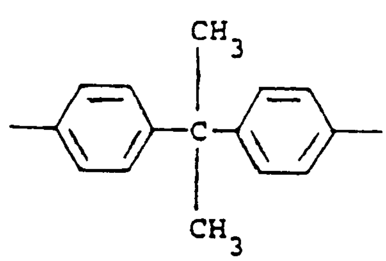

7. Use as defined in one or more of claims 1 to 6, wherein N,N-dimethylformamide is the solvent.

8. A solid film prepared by using the solution defined in one or more of claims 1 to 7 for coating.

9. A solution for coating comprising at least one polyarylethersulfone containing units of the following formula:

(I) 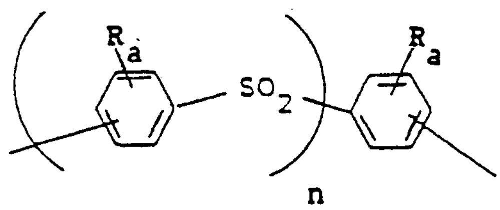 , and

(II) 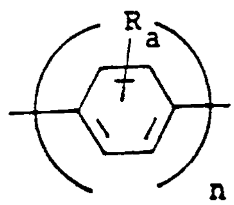

and/or

(III) 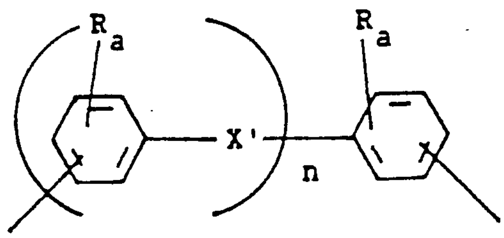

wherein R is independently hydrogen, $C_1$ to $C_6$ alkyl or $C_4$ to $C_8$ cycloalkyl, X' is independently

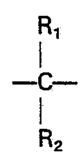

wherein $R_1$ and $R_2$ are independently hydrogen or $C_1$ to $C_9$ alkyl, or

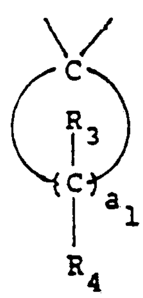

wherein $R_3$ and $R_4$ are independently hydrogen or $C_1$ to $C_8$ alkyl, and $a_1$ is an integer of 2 to 8; —S—, or —O—, a is an integer of 0 to 4 and n is independently an integer of 1 to 3 and wherein the ratio of unit (I) to the sum of units (II) and/or (III) is greater than 1, wherein the units are attached to each other by an —O— bond, dissolved in a solvent comprising methylene chloride or N,N-dimethylformamide, said solution being substantially free of alkali metal salts.

10. A solution as defined in claim 9 wherein in the polyarylethersulfone, unit (I) has the formula:

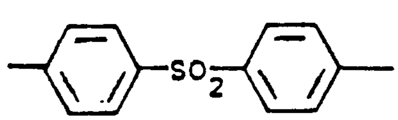

11. A solution as defined in one or both of claims 9 and 10, wherein in the polyarylethersulfone, unit (II) has the formula:

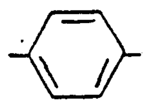 , or 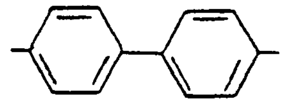

12. A solution as defined in one or more of claims 9 to 11, wherein in the polyarylethersulfone, unit (III) has the formula:

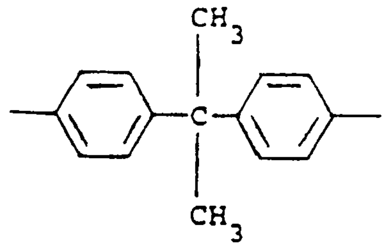

13. A solution as defined in claim 9, wherein the polyarylethersulfone contains recurring units of the formula:

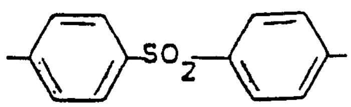 , and 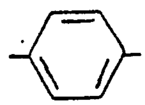 , or 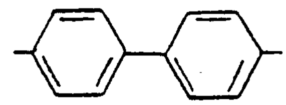

said units being attached to each other or by an —O— bond.

14. A solution as defined in claim 9, wherein the polyarylethersulfone contains recurring units of the formula:

(I) 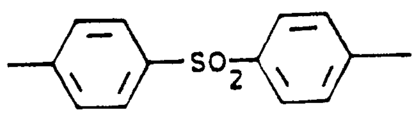 , and

(II) 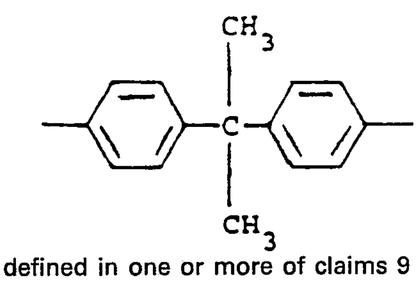

15. A solution as defined in one or more of claims 9 to 14, wherein N,N-dimethylformamide is the solvent.

16. An anisotropic membrane or hollow fiber prepared by coagulation of the solution of claim 15 into an aqueous medium.

**Patentansprüche**

1. Die Verwendung einer Lösung zum Beschichten, die mindestens ein Polyarylethersulfon mit Einheiten der folgenden Formel

(I) 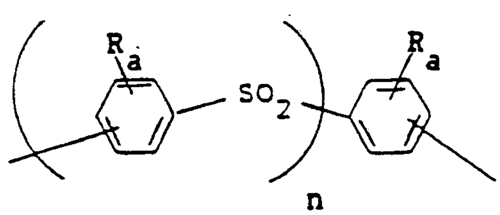 , und (II) 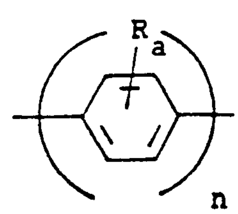

und/oder (III) 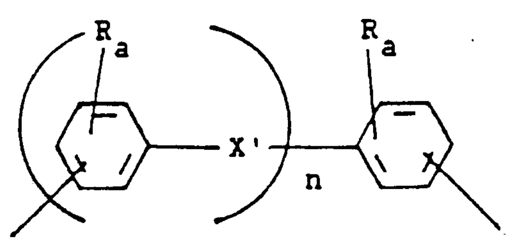

umfaßt, worin R unabhängig Wasserstoff, $C_1$—$C_6$-Alkyl oder $C_4$—$C_8$-Cycloalkyl bedeutet und X′ unabhängig

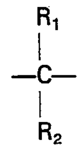

worin $R_1$ und $R_2$ unabhängig Wasserstoff oder $C_1$—$C_9$-Alkyl sind, oder

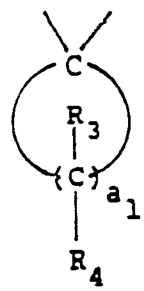

worin $R_3$ und $R_4$ unabhängig Wasserstoff oder $C_1$—$C_8$-Alkyl sind und $a_1$ eine ganze Zahl von 2 bis 8 ist, —S— oder —O— bedeutet, a eine ganze Zahl von 0 bis 4 ist und n unabhängig eine ganze Zahl von 1 bis 3 ist und worin das Verhältnis von Einheit (I) zur Summe der Einheiten (II) und/oder (III) größer als 1 ist, und die Einheiten durch eine —O— Bindung aneinander gebunden sind, gelöst in einem Lösungsmittel, das Methylenchlorid oder N,N-Dimethylformamid umfaßt.

2. Die Verwendung nach Anspruch 1, worin im Polyarylethersulfon die Einheit (I) die Formel

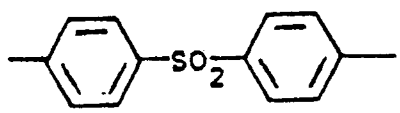

hat.

3. Die Verwendung nach einem oder beiden der Ansprüche 1 bis 2, worin im Polyarylethersulfon die Einheit (II) die Formel

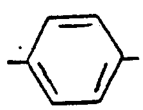 , oder 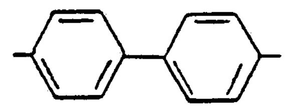

hat.

4. Die Verwendung nach einem oder mehreren der Ansprüche 1 bis 3, worin im Polyarylethersulfon die Einheit (III) die Formel

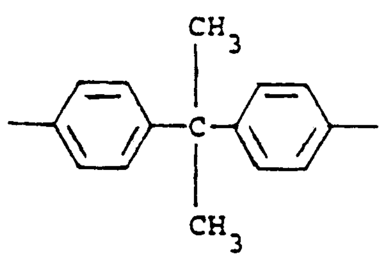

hat.

5. Die Verwendung nach Anspruch 1, worin das Polyarylethersulfon wiederkehrende Einheiten der Formel

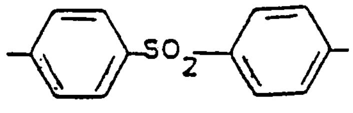 , und 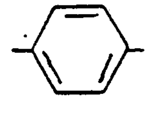 , oder 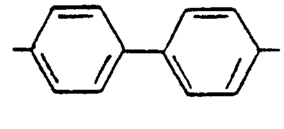

enthält, die miteinander oder durch eine —O— Bindung aneinander gebunden sind.

6. Die Verwendung nach Anspruch 1, worin das Polyarylethersulfon wiederkehrende Einheiten der Formel

(I) 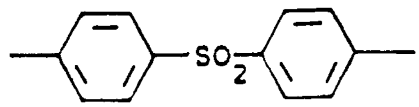 , und (II) 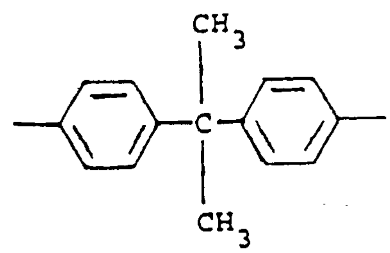

enthält.

7. Die Verwendung nach einem oder mehreren der Ansprüche 1 bis 6, worin N,N-Dimethylformamid das Lösungsmittel ist.

8. Fester Film, hergestellt durch Verwendung der in einem oder mehreren der Ansprüche 1 bis 7 definierten Lösung zum Beschichten.

9. Lösung zum Beschichten, die mindestens ein Polyarylethersulfon mit Einheiten der folgenden Formel

(I) 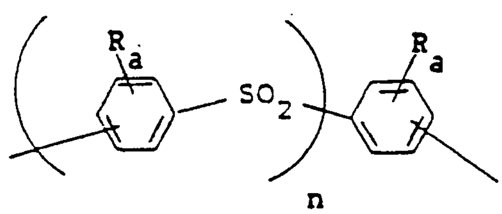 , und (II) 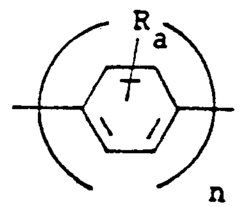

und/oder (III) 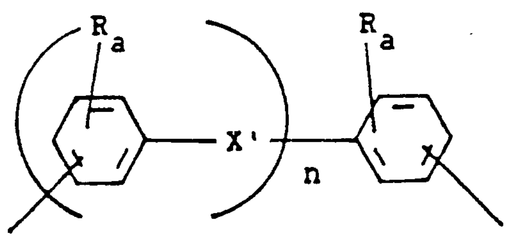

umfaßt, worin R unabhängig Wasserstoff, $C_1$—$C_6$-Alkyl oder $C_4$—$C_8$-Cycloalkyl bedeutet und X' unabhängig

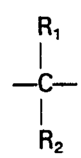

worin $R_1$ und $R_2$ unabhängig Wasserstoff oder $C_1$—$C_9$-Alkyl sind, oder

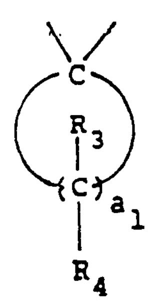

worin $R_3$ und $R_4$ unabhängig Wasserstoff oder $C_1$—$C_8$-Alkyl sind und $a_1$ eine ganze Zahl von 2 bis 8 ist, —S— oder —O— bedeutet, a eine ganze Zahl von 0 bis 4 ist und n unabhängig eine ganze Zahl von 1 bis 3 ist und worin das Verhältnis von Einheit (I) zur Summe der Einheiten (II) und/oder (III) größer als 1 ist, und die Einheiten durch eine —O— Bindung aneinander gebunden sind, gelöst in einem Lösungsmittel, das Methylenchlorid oder N,N-Dimethylformamid umfaßt, wobei die Lösung von Alkalimetallsalzen praktisch frei ist.

10. Lösung nach Anspruch 9, worin im Polyarylethersulfon die Einheit (I) die Formel

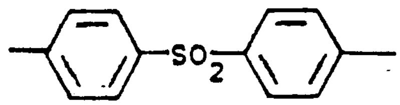

hat.

11. Lösung nach einem oder beiden der Ansprüche 9 und 10, worin im Polyarylethersulfon die Einheit (II) die Formel

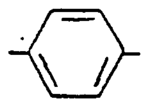 , oder 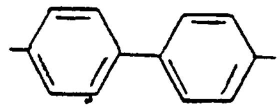

hat.

12. Lösung nach einem oder mehreren der Ansprüche 9 bis 11, worin im Polyarylethersulfon die Einheit (III) die Formel

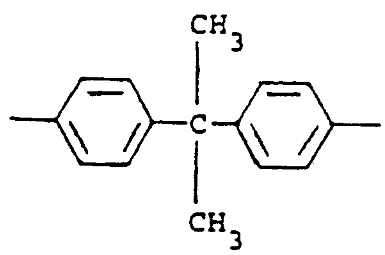

hat.

13. Lösung nach Anspruch 9, worin das Polyarylethersulfon wiederkehrende Einheiten der Formel

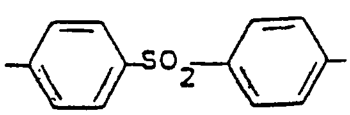 , und 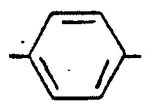 , oder 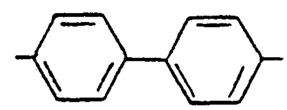

enthält, die miteinander oder durch eine —O— Bindung aneinander gebunden sind.

14. Lösung nach Anspruch 9, worin das Polyarylethersulfon wiederkehrende Einheiten der Formel

(I) 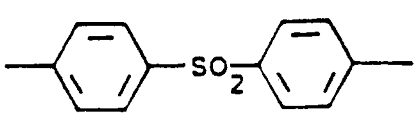 , und (II) 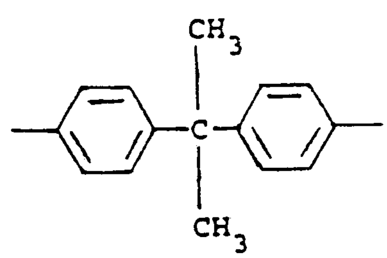

enthält.

15. Lösung nach einem oder mehreren der Ansprüche 9 bis 14, worin N,N-Dimethylformamid das Lösungsmittel ist.

16. Anisotrope Membran oder Hohlfaser, hergestellt durch Koagulieren der Lösung nach Anspruch 15 in einem wässrigen Medium.

**Revendications**

1. Utilisation d'une solution comprenant au moins une polyaryléthersulfone contenant des motifs de formules suivantes:

(I) 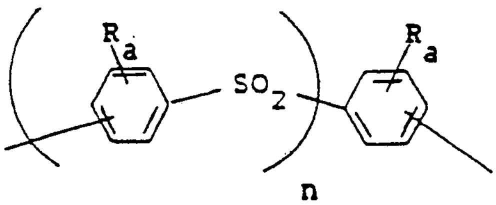 , et (II) 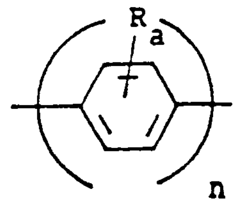

et/ou (III) 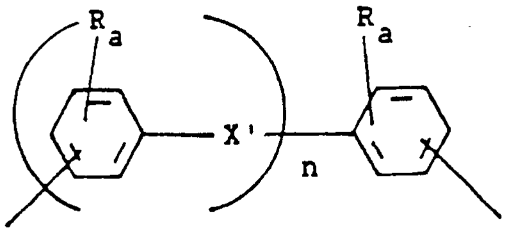

dans lesquelles R représente indépendamment l'hydrogène, un groupe alkyle en $C_1$ à $C_6$ ou un groupe cycloalkyle en $C_4$ à $C_8$, X' représente indépendamment un groupe

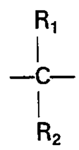

dans lequel $R_1$ et $R_2$ représentent indépendamment l'hydrogène ou un groupe alkyle en $C_1$ à $C_9$, ou

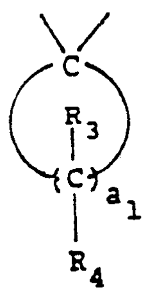

formule dans laquelle $R_3$ et $R_4$ représentent indépendamment l'hydrogène ou un groupe alkyle en $C_1$ à $C_8$ et $a_1$ est un nombre entier de 2 à 8; —S— ou —O—, a est un nombre entier de 0 à 4 et n représente indépendamment un nombre entier de 1 à 3 et le rapport du motif (I) à la somme des motifs (II) et/ou (III) est supérieur à 1, les motifs étant liés entre eux par une liaison —O—, en solution dans un solvant comprenant du chlorure de méthylène ou du N,N-diméthylformamide, en vue de former un revêtement.

2. Utilisation suivant la revendication 1, dans laquelle le motif (I), dans la polyaryléthersulfone, répond à la formule:

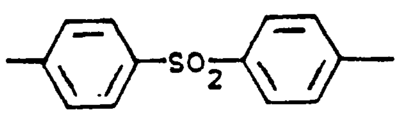

3. Utilisation suivant l'une ou l'autre des revendications 1 et 2 ou les deux, dans laquelle le motif (II), dans la polyaryléthersulfone, répond à la formule:

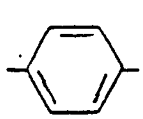 , ou 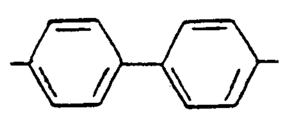

4. Utilisation suivant une ou plusieurs des revendications 1 à 3, dans laquelle le motif (III), dans la polyaryléthersulfone, répond à la formule:

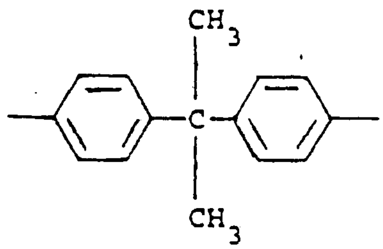

5. Utilisation suivant la revendication 1, dans laquelle la polyaryléthersulfone contient des motifs récurrents de formules:

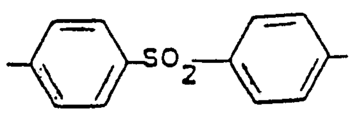 , et 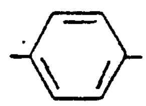 , ou 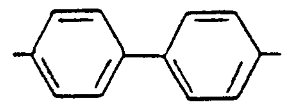

lesdits motifs étant liés les uns aux autres par une liaison —O—.

6. Utilisation suivant la revendication 1, dans laquelle la polyaryléthersulfone contient des motifs récurrents de formules:

(I) 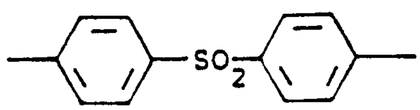 , et (II) 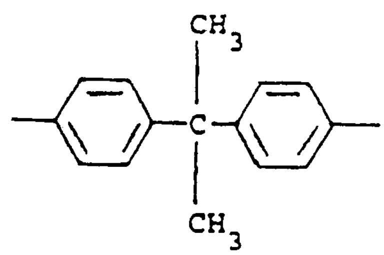

7. Utilisation suivant une ou plusieurs des revendications 1 à 6, dans laquelle le N,N-diméthylformamide constitue le solvant.

8. Film solide préparé en utilisant la solution définie dans l'une ou plusieurs des revendications 1 à 7, en vue de former un revêtement.

9. Solution de revêtement, comprenant au moins une polyaryléthersulfone contenant des motifs de formules suivantes:

(I) 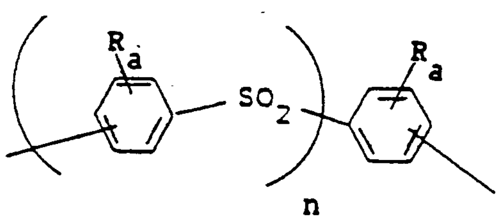 et (II) 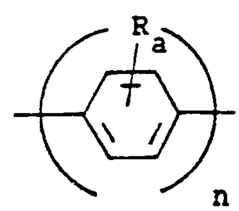

et/ou (III) 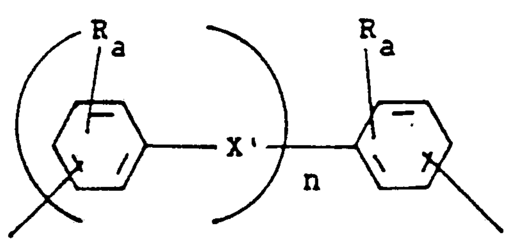

dans lesquelles R représente indépendamment l'hydrogène, un groupe alkyle en $C_1$ à $C_6$ ou un groupe cycloalkyle en $C_4$ à $C_8$, X' représente indépendamment

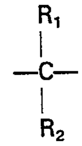

où $R_1$ et $R_2$ représentent indépendamment l'hydrogène ou un groupe alkyle en $C_1$ à $C_9$, ou

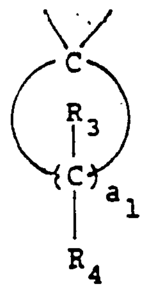

formule dans laquelle $R_3$ et $R_4$ représentent indépendamment l'hydrogène ou un groupe alkyle en $C_1$ à $C_8$ et $a_1$ est un nombre entier de 2 à 8; —S— ou —O—, a est un nombre entier de 0 à 4 et n représente indépendamment un nombre entier de 1 à 3 et le rapport du motif (I) à la somme des motifs (II) et/ou (III) est supérieure à 1, les motifs étant attachés entre eux par une liaison —O—, en solution dans un solvant comprenant du chlorure de méthylène ou du N,N-diméthylformamide, ladite solution étant principalement dépourvue de sels de métaux alcalins.

10. Solution suivant la revendication 9, dans laquelle le motif (I), dans la polyaryléthersulfone, répond à la formule:

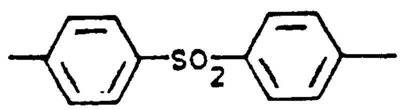

11. Solution suivant l'une des revendications 9 et 10 ou les deux, dans laquelle le motif (II), dans la polyaryléthersulfone, répond à la formule:

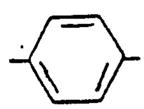 , ou 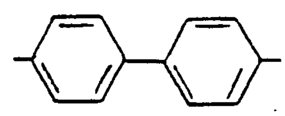

12. Solution suivant une ou plusieurs des revendications 9 à 11, dans laquelle le motif (III), dans la polyaryléthersulfone, répond à la formule:

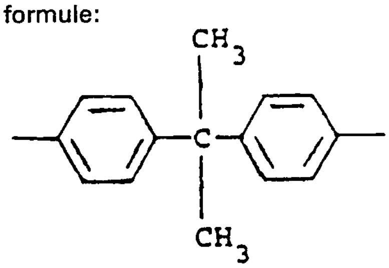

13. Solution suivant la revendication 9, dans laquelle la polyéthersulfone contient des motifs récurrents de formules:

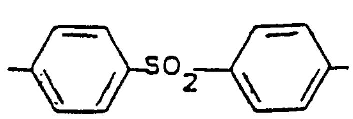 , ou 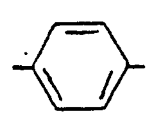 , ou 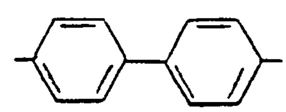

lesdits motifs étant liés entre eux par une liaison —O—.

14. Solution suivant la revendication 9, dans laquelle la polyaryléthersulfone contient des motifs récurrents de formules:

(I) 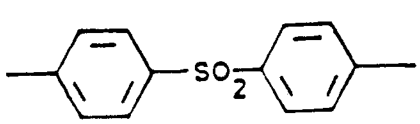 , et (II) 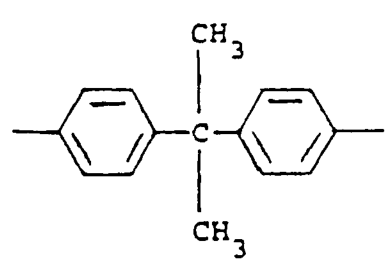

15. Solution suivant une ou plusieurs des revendications 9 à 14, dans laquelle le N,N-diméthylformamide constitue le solvant.

16. Membrane anisotrope ou fibre creuse préparée par coagulation de la solution suivant la revendication 15 dans un milieu aqueux.